# EUROPEAN PATENT APPLICATION

(11) **EP 0 852 993 A1**
(43) Date of publication of application: **15.07.1998**
(21) Application number: 98500002.5
(22) Date of filing: 05.01.1998
(51) Int. Cl.: B29C 33/48, B29C 45/26

(54) **Core for moulding an elbow in a mould and process for said moulding**

(30) Priority: 10.01.1997 ES 9700039
(71) Applicant: Tauvi, S.A., 08018 Barcelona (ES)
(72) Inventor: Comas Agusti, Josep, 08470-Vallgorguina (ES)
(74) Representative: Curell Sunol, Jorge

(57) **Abstract**

The core comprises two symmetrically superimposable halves, each comprising a rear body member (12) having a first internal flat surface (18), a polyhedral projection (20) extending from the surface (18), a curved surface having a cylindrical portion (32) and a doughnut-shaped portion (30), and a first upper surface (38); two centre body members (14) having a second lateral surface (48), a second internal surface (52), a curved surface with a cylindrical portion (58) and a doughnut-shaped portion (56), a flat front surface (54) and a second upper surface (60); and an inner body member (16) having a third internal surface (62), a curved surface with a cylindrical portion (68) and a doughnut-shaped portion (66), and a third upper surface (70). The core may undergo successively a translation movement affecting only the rear body member (12); a second movement perpendicular to the former and a third movement parallel to the first movement.

## Description

This invention relates to a core for moulding a elbow in a mould, said elbow having: a centre region having a doughnut-shaped internal surface and two end regions having an internal cylindrical circular surface and defining respective axes.

The invention also relates to a process for moulding a elbow using the said core.

The term "elbow" is used in the description and claims with the acceptation of a portion of tube bent in arcuate form, serving to vary the direction of a pipeline.

It is known that up to now it has not been possible to injection mould a pipe elbow, since there has been no way of overcoming the serious difficulties inherent in the mould stripping. Consequently, the elbows produced regularly do not have a constant passage section nor a constant wall thickness. All of this may cause serious drawbacks, on affecting the flowrate of the fluid flowing through the elbow.

It is an object of the invention overcome these drawbacks. This object is achieved by using a core of the type first mentioned above, which is characterized in that it comprises two halves, each of which has a circular flat surface, said halves being suitable for occupying an active position in which said circular flat surfaces are juxtaposed and said halves become symmetrical relative to the plane of said circular flat surfaces, each half comprising: a core rear body member, formed by at least one part and which is formed with: [a] a first internal flat surface which, in said active position, is parallel to one of said axes; [b] a polyhedral projection extending from said internal flat surface, limited by two first lateral surfaces and at the front by a second flat surface parallel to said first internal flat surface; [c] a first external curved surface, having a cylindrical portion and a doughnut-shaped portion; and [d] a first upper surface, comprised in said circular flat surface; two core centre body members, each of which, being formed by at least one part, is formed with: [a] a second lateral surface slidingly engageable with one of said first lateral surfaces; [b] a second internal surface slidingly engageable with said first internal flat surface; [c] a second external curved surface, having a cylindrical portion and a doughnut-shaped portion respectively following said cylindrical and doughnut-shaped portions of said core rear body member; [d] a flat front surface adapted to lie flush with said second flat surface of said polyhedral projection; and [e] a second upper surface, comprised in said circular flat surface; and an core inner body member, formed by at least one part and formed with: [a] a third internal surface slidingly engageable with said second flat surface of said polyhedral projection and said front surfaces of said core centre body members; [b] a third external curved surface, having a cylindrical portion and a doughnut-shaped portion, respectively following said cylindrical and doughnut-shaped portions of said core rear and central body members; and [c] a third upper surface, comprised in said circular flat surface; and in that it is adapted to undergo: a first movement of translation in the direction of one of said axes, with said first movement affecting only said core rear body member; a movement oblique to the former, affecting all the core parts and which is the result of a second movement perpendicular to said first movement and a third movement parallel to said first movement.

With the core of the invention, a higher manufacturing speed is also achieved and the use of materials other than polyvinyl chloride, such as polypropylene and polystyrene, is allowed.

Further advantages and features of the invention will be appreciated from the following description in which, without any limiting nature, there is disclosed a preferred embodiment of the invention, with reference to the accompanying drawings, in which:

Figure 1 is a front elevation view of the core rear body member.

Figure 2 is a side elevation view of the core rear body member.

Figure 3 is an internal perspective view of the core rear body member; T-shaped guideways, the centre portion of which engages the bottom of the slots, are not shown in Figures 1 to 3.

Figure 4 is an external perspective view of the core rear body member.

Figure 5 is a perspective view of the two core centre body members.

Figure 6 is a perspective view of the core inner body member.

Figure 7 is a perspective view of one half of the core and part of the pipe elbow; the core half is in the moulding position.

Figure 8 is a side elevation view, partly in section, of the elbow and of the core in the same position as illustrated in Figure 7.

Figure 9 is a perspective view of one half of the core and part of the pipe elbow; the core half is in an intermediate removal position.

Figure 10 is a side elevation view, partly in section, of the elbow, and of the core in the same position as in Figure 9.

Figure 11 is a perspective view of one half of the core and part of the pipe elbow; the core half is in a second subsequent removal position.

Figure 12 is a side elevation view, partly in section, of the elbow and of the core in the same position as in Figure 11. In Figures 7 to 12, the core rear, centre and inner body members have been illustrated in simplified form, to facilitate the understanding thereof.

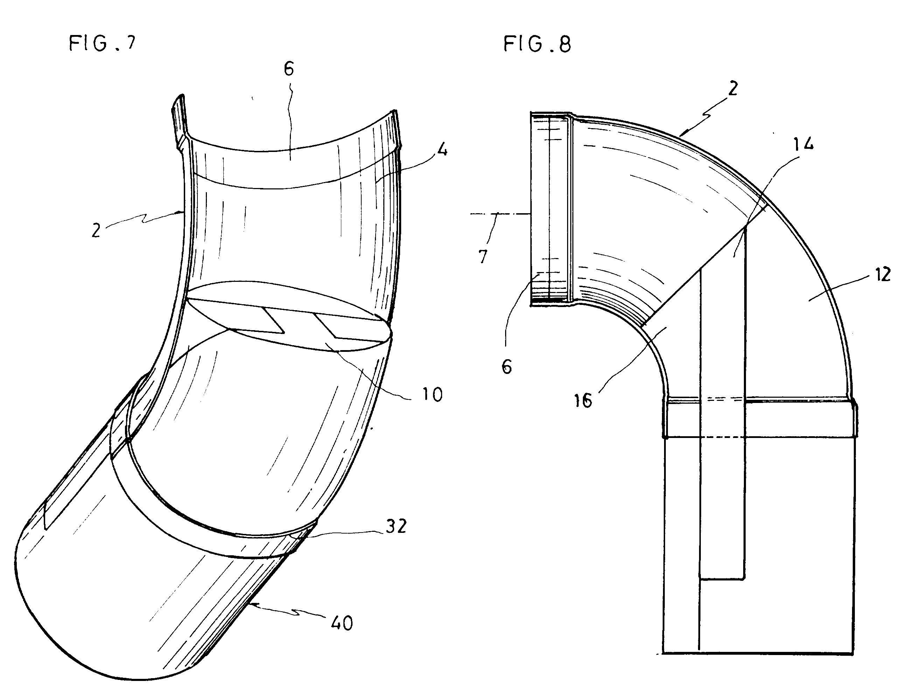

As has already been stated, the core of the invention is for moulding elbows 2. These elbows have a centre portion having an internal doughnut shaped surface 4, i.e. a surface defined by the rotation of a circumference around an axis which lies in the same plane as the circumference and which is external thereto. Furthermore, the said elbows 2 have end portions 6 having a cylindrical internal surface, the right section of which is circular and which define respective ideal axes 7 (Figure 8). The end regions 6 preferably have a larger internal diameter than that of the circumference generating the doughnut-shaped surface and consequently form seats situated in the ends of the elbow 2.

The circular ends 8 of the end seat regions 6 are preferably located on respective mutually perpendicular planes, which implies that the arc of the elbow 2 is 90°. The drawing figures relate to these cases.

The core of the invention comprises two halves, one of which is shown in the drawing. Each half has a flat circular end surface 10 (Figure 7), the diameter of which is obviously equal to that of the circle defined by the internal doughnut-shaped surface 2. These two end surfaces may be juxtaposed, such that both core halves 2 are arranged symmetrically to the plane of the flat end surfaces 10 in the juxtaposed position. When the core is located within a mould in this position, the moulding operation may start and in the specification and claims, this position is called the core active position.

Each half of a core comprises a core rear body member 12, two core centre body members 14 and a core inner body member 16. Each of these body members may be formed by one or more parts duly coupled together.

The core rear body member 12 is formed with a first inner flat surface 18 which in the core active position is disposed parallel to the ideal axis 7. Extending from the said flat surface 18 there is a polyhedral, preferably central projection 20, having on the front thereof a second flat surface 22, parallel to the first flat surface 18. At the sides thereof, the polyhedral projection 20 is bounded by two first side surfaces 24 which preferably converge upwardly.

The said first side surfaces 24 are also preferably provided with first longitudinal strips 26 which are either sunken into or extend outwardly from the immediate region of the corresponding first surface 24. In turn, the second flat surface 22 is provided with a third longitudinal strip 28 which is also sunken or outwardly projected relative to the immediate region of the second surface 22. In other words, these first 26 and third 28 strips are respectively at a level different from the corresponding immediate region of the first surface 24 or of the second flat surface 22. In one embodiment not shown, the first 26 and third 20 strips are formed by T-shaped guides, of which the free end of the central portion thereof is attached in the bottom of the slots illustrated as open U-shaped slots, while the arms thereof jut out above the respective first side surfaces 24 and second flat surface 22. Further reference will be made thereto hereinafter.

The core rear body member 12 is also provided with a first external curved surface having a doughnut-shaped portion 30 and a cylindrical portion 32 (Figure 7) and which are for providing the internal doughnut-shaped surface 4 and the end regions 6 of the elbow 2 having a cylindrical inner surface.

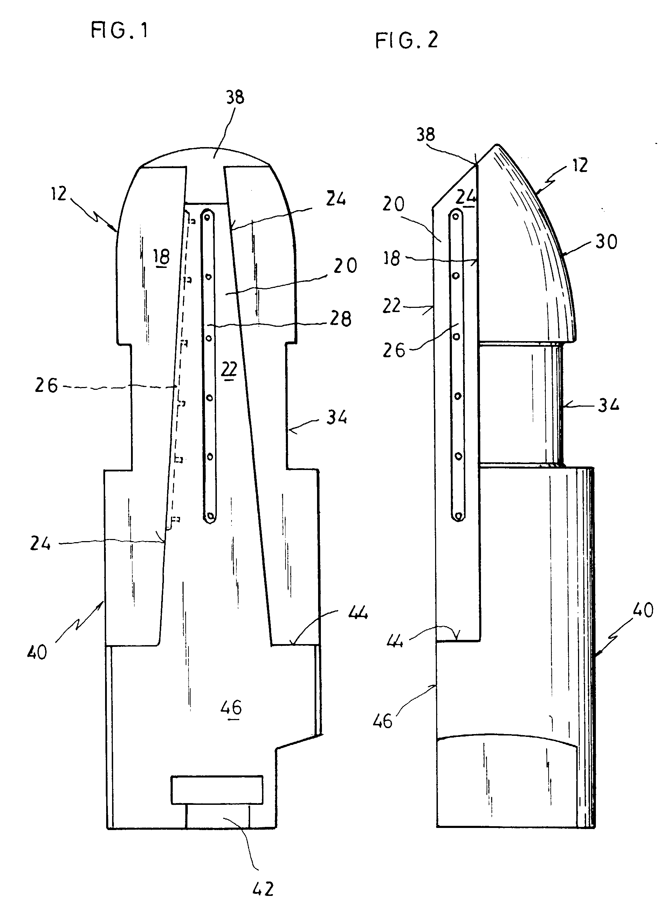

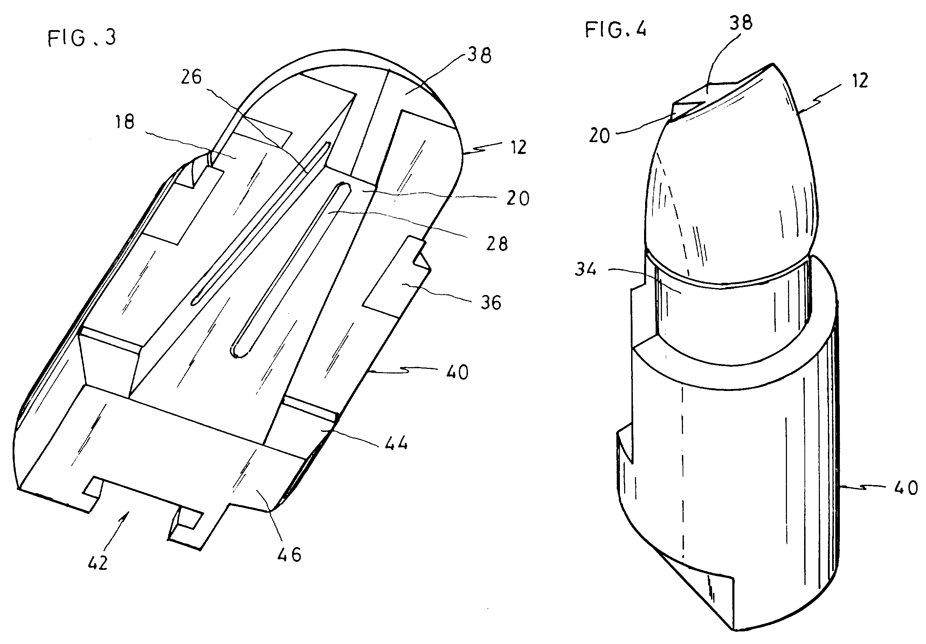

For a better understanding, Figures 1, 2 and 4 show a preferred embodiment of the invention. In this embodiment, the core rear body member 12 is provided with a cylindrically shaped throttled portion 34, the diameter of which is less than that of the cylindrical portion 32. This throttled portion allows for the fitting of a collar member 36 (Figure 3), the outer side form of which is adapted for the moulding of the seats 6 situated at the ends of the elbow 2. It will be understood that by changing the collar member 36, one same core is made suitable for providing different seats. Figures 7, 9 and 11 show a core rear body member 12 not having the collar member and throttled portion, although in these cases also seats may be moulded in the elbow 2.

The core rear body member 12 is formed also with a first upper surface 38 which in the core active position is comprised in the flat circular end surface 10.

The core rear body member 12 as such, i.e. the body member whose outer surfaces take part, together with the mould surface, in the moulding of the elbow, has been described in the foregoing paragraphs. Nevertheless, for operation thereof (the same as with the other core body members) there is contemplated the existence of a handling portion 40, preferably integral with the body member 12. This may be attached to not shown control means and, to such end, is provided with a cavity 42 for the attachment of said control means. The operation of the body member 12 will be referred to again hereinafter.

The outer surface of the handling portion 40 does not take part in the shaping of the elbow and, therefore, many varied shapes may be adopted. Nevertheless, it preferably has a portion having a cylindrical curved outer surface, as a continuation of the cylindrical portion 32. It is also preferably provided with a flat surface coplanar with the first flat surface 18, as well as a continuation of the polyhedral projection 20. It is, furthermore, provided with a step 44 defined between the said first flat surface 18 and a surface 46 coplanar with the said second flat surface 22.

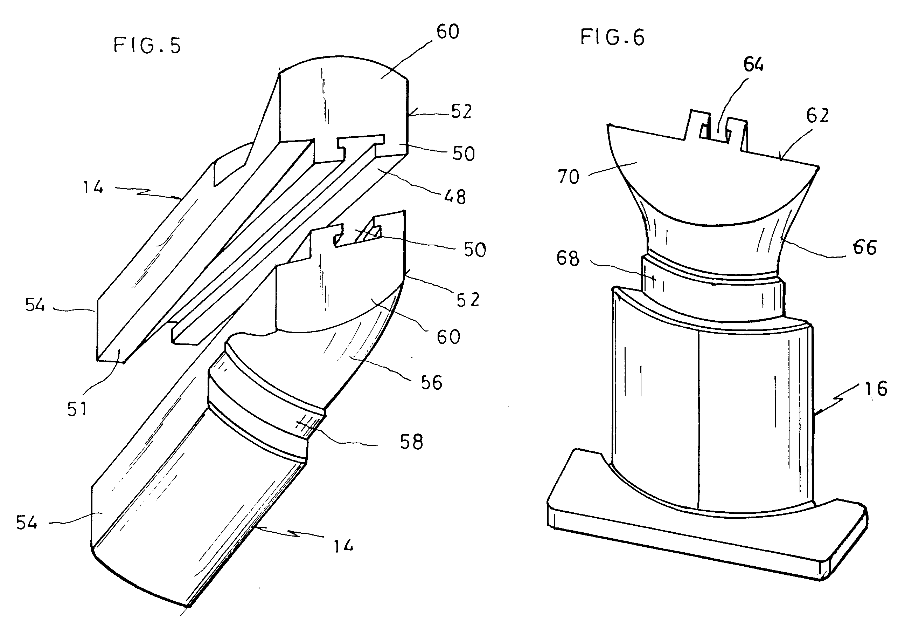

The two core centre body members 14 are preferable the same and symmetrical when the core is in the active position thereof. Each central body member 14 is formed with a second side surface 48 which may engage one of the first side surfaces 24 of the polyhedral projection 20 and slide along this surface 24. So that this sliding may occur appropriately, each side face 24 is preferably provided with a second strip 50 which is either sunken into or extended from the immediate region of the corresponding second side surface 48. Figure 5 shows strips 50 in the form of a T-shaped slot, in which the outwardly extending arms of the T-shaped guides, previously referred to, may slide. Adjacent the said T-shaped strip, there is a discharge surface 51, which facilitates the movements of the core centre body members 14, which will be referred to hereinafter.

Each core centre body member 14 is also provided with a second internal surface 52 which in the core active position engages the first internal flat surface 18 of the core rear body member 12. Opposite thereto, it is provided with a flat front surface 54 which in the said active position is flush with the second flat surface 22 of the polyhedral projection 20. It is also provided with a second end curved surface, in which there is to be appreciated a doughnut-shaped portion 56 and a cylindrical portion 58 which are a continuation of the doughnut-shaped portion 30 and cylindrical portion 32 of the core rear body member 12. At the upper end thereof there is a second upper surface 60, also comprised in the end circular flat surface 10.

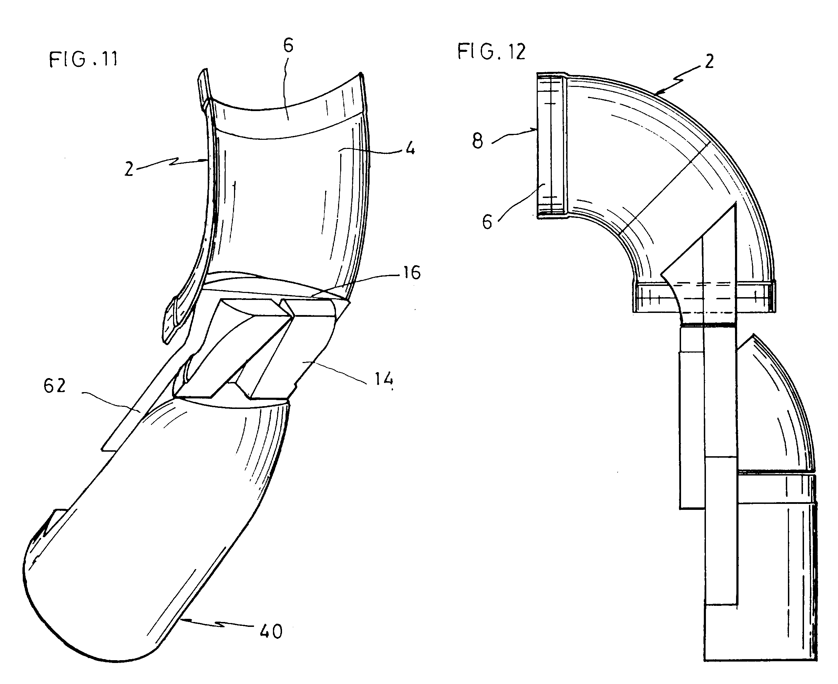

The core inner body member 16 is formed with a third internal surface 62 (Figures 6 and 11). This third surface 62 may slidingly engage the second flat surface 22 of the polyhedral projection 20. Similar to what was described for the second side surface 48 of the core centre body members 14, the third surface 62 is provided with a fourth strip 64 which is either sunken into or extended outwardly from the immediate region of the third internal surface 62. Figure 6 shows a strip 64 in form of a T-shaped slot and, like previously, the outwardly extending arms of the T-shaped guides, previously mentioned, may slide in the slot.

The core inner body member 16 is provided with a third curved surface having a doughnut-shaped portion 66 and a cylindrical portion 68 which respectively for a continuation of the doughnut-shaped portions 30 and 56 and of the cylindrical portions 32 and 56 of the core rear 12 and centre 14 body members. At the top thereof, there is a third upper surface 70 which in the core active position forms part of the circular flat surface 10.

In a similar fashion to what has been described with regard to the core rear body member 12, the core centre 14 and inner 16 body members may have throttled portions in which there may be attached other collar members which, together with the collar member 36, allow the moulding of end seats, as described above.

When each of the core halves described are mounted in the coupled position shown in Figures 7 and 8 and furthermore with their respective flat surfaces 10 juxtaposed, the core is in position for an elbow 2 moulding operation, in co-operation with a mould, not shown in the figures.

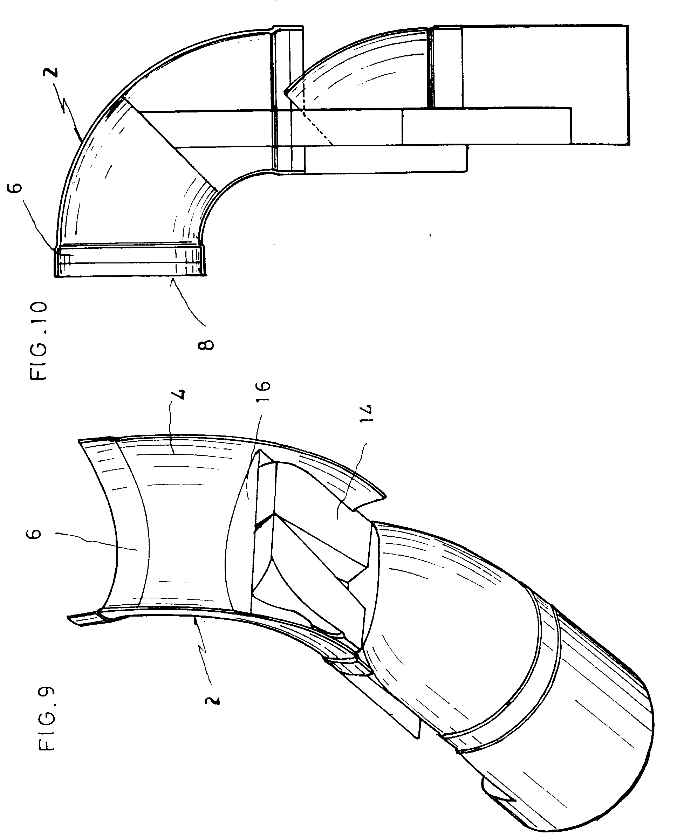

After injecting the appropriate plastics material for forming the elbow 2, it is necessary to remove the core from the interior of said elbow. To make this withdrawal possible, the invention contemplates that each of the core rear body members 12 may make a first movement in the direction of the corresponding axis 7. The relationship between, on the one hand, the first longitudinal strips 26 of the polyhedral projection 20 and the third longitudinal strips 50 of the core centre body members 14 and, on the other hand, between the third strip 28 of the second flat surface 22 of the polyhedral projection 20 and the fourth longitudinal strip 64 of the core inner body member 16 allow this first movement to involve only the core rear body members 12, without causing any movement in this axial direction of the remaining body members; nevertheless, the said movement causes the core centre body members 14 (of each core half) to move closer together, as is to be seen in Figure 9 and that, therefore, they cease to engage the inner surface of the elbow 2.

Then, when the first movement has withdrawn the core rear body member 12 from inside the elbow 2, a new movement takes place which may comprise a first stage of movement in a direction perpendicular to that of said first movement, whereby the core half shown is disposed as shown in Figures 9 and 10. In other words, this stage of movement causes the core inner member 16 also to lose contact with the inner surface of the elbow 2. Then, a further movement stage takes place in the same direction as the first movement, which leads to complete withdrawal of the core from the elbow 2. Opening of the mould allows the elbow to be removed. Obviously, a single oblique movement resulting from these two stages may also take place.

## Claims

1. A core for moulding a elbow in a mould, said elbow (2) having: a centre region having a doughnut-shaped internal surface and two end regions having an internal cylindrical circular surface and defining respective axes (7), characterized in that it comprises two halves, each of which has a circular flat surface (10), said halves being suitable for occupying an active position in which said circular flat surfaces (10) are juxtaposed and said halves become symmetrical relative to the plane of said circular flat surfaces (10), each half comprising:
a core rear body member (12), formed by at least one part and which is formed with: [a] a first internal flat surface (18) which, in said active position, is parallel to one of said axes (7); [b] a polyhedral projection (20) extending from said internal flat surface (18), limited by two first lateral surfaces (24) and at the front by a second flat surface (22) parallel to said first internal flat surface (18); [c] a first external curved surface, having a cylindrical portion (32) and a doughnut-shaped portion (30); and [d] a first upper surface (38), comprised in said circular flat surface (10);
two core centre body members (14), each of which, being formed by at least one part, is formed with: [a] a second lateral surface (48) slidingly engageable with one of said first lateral surfaces (24); [b] a second internal surface (52) slidingly engageable with said first internal flat surface (18); [c] a second external curved surface, having a cylindrical portion (58) and a doughnut-shaped portion (56) respectively following said cylindrical (32) and doughnut-shaped (30) portions of said core rear body member (12); [d] a flat front surface (54) adapted to lie flush with said second flat surface (22) of said polyhedral projection (20); and [e] a second upper surface (60), comprised in said circular flat surface (10);
and an core inner body member (16) , formed by at least one part and formed with: [a] a third internal surface (62) slidingly engageable with said second flat surface (22) of said polyhedral projection (20) and said front surfaces (54) of said core centre body members (14); [b] a third external curved surface, having a cylindrical portion (68) and a doughnut-shaped portion (66), respectively following the cylindrical (32, 58) and doughnut-shaped (30, 56) portions of said core rear (12) and centre (14) body members; and [c] a third upper surface (70), comprised in said circular flat surface (10);
and in that it is adapted to undergo: a first movement of translation in the direction of one of said axes (7), with said first movement affecting only said core rear body member (12); a movement oblique to the former, affecting all the core body members (12, 14, 16) and which is the result of a second movement perpendicular to said first movement and a third movement parallel to said first movement.

2. The core of claim 1, characterized in that said polyhedral projection (20) is disposed in the centre on said internal flat surface (18).

3. The core of at least one of claims 1 and 2, characterized in that said two core centre body members (14) are the same and, in said active position, are arranged symmetrically.

4. The core of at least one of claims 1 to 3, characterized in that each of said core body members (12, 14, 16) is extended by a handling portion (40) adapted to be attached to control means capable of causing: the access of the core inside said mould, the fixed positioning thereof in said active position relative to said mould and the withdrawal from the interior of said mould; said handling portion (40) starting in said active position in the edge of said end regions having an internal cylindrical circular surface of the elbow.

5. The core of at least one of claims 1 to 4, characterized in that said first lateral surfaces (24) of said polyhedral projection (20) taper towards said first upper surface (38).

6. The core of at least one of claims 1 to 5, characterized in that each of said first lateral surfaces (24) of said polyhedral projection (20) are provided with a first strip (26) at a level different from the level of the immediately adjacent region of the first surface (24), while each of said second lateral surfaces (48) of said core centre body members (14) are provided with a second strip (50) also at a different level from the level of the immediately adjacent region of the second lateral surface (48), said first (26) and second (50) strips being mutually engageable for guiding purposes during said first and third movements of said core rear body member (12).

7. The core of at least one of claims 1 to 6, characterized in that said second flat surface (22) of said polyhedral projection (20) is provided with a third strip (28) at a level different from the level of the immediately adjacent region of the second surface (22), while said third internal lateral surface (62) of said core inner body member (16) is provided with a fourth strip (64) also at a different level from the level of the immediately adjacent region of the third surface (62), said third (28) and fourth (64) strips being mutually engageable for guiding purposes during said first and third movements of said core rear body member (12).

8. The core of one of claims 6 or 7, characterized in that said first (26) and third (28) strips are U-shaped longitudinal open slots, in which there are attached T-shaped guideways, the head of which may be housed in said second (50) and fourth (60) strips, shaped as T-slots.

9. The core of at least one of claims 1 to 8, characterized in that said cylindrical portions (32, 58, 68) of said external curved surfaces have diametrical dimensions adapted for moulding an elbow end seat.

10. The core of at least one of claims 1 to 8, characterized in that each of said core body members (12, 14, 16), from the start of the doughnut-shaped portion (30, 56, 66) of the external curved surface thereof in a direction away from said doughnut-shaped portion (30, 56, 66) is provided with a throttled portion (34) the diametrical dimension of which is less than that of the cylindrical portion (32, 58, 68), said throttled portion (34) being adapted to house collar members (36) adapted to provide an end seat to said elbow (2).

11. A process for moulding a pipe core, said core having: a centre portion, the internal surface of which is doughnut-shaped and two end cylindrical seat regions, centered relative to said centre portion, characterized in that it comprises the use of a core according to any one of claims 1 to 10.

12. The process of claim 11, characterized in that it comprises the following steps:
providing an elbow-shaped mould;
inserting in the interior of said mould two core halves, juxtaposed by superpositioning of respective surfaces (10) of said halves and symmetrical relative to the plane of said surfaces (10);
injecting material;
causing a first movement of said core rear body member (12) of each core half in the direction of the axis (7) of the corresponding cylindrical portion thereof;
causing a movement oblique to the first movement, affecting all the core body members (12, 14, 16) and which is the result of a second movement perpendicular to said first movement and a third movement parallel to said first movement.
